# EUROPÄISCHE PATENTSCHRIFT

(11) **EP 3 283 568 B1**
(45) Veröffentlichungstag und Bekanntmachung des Hinweises auf die Patenterteilung: **12.06.2019**
(21) Anmeldenummer: 16715529.0
(22) Anmeldetag: 08.04.2016
(51) Int. Cl.: C08L 31/04, C09J 131/04, C09D 131/04, D06M 15/333, D06N 3/04, D06N 7/00

(54) **TEPPICHBESCHICHTUNGS-ZUSAMMENSETZUNGEN**
CARPET COATING COMPOSITIONS
COMPOSITIONS DE REVÊTEMENT DE TAPIS

(30) Priorität: 17.04.2015 DE 102015206954
(43) Veröffentlichungstag der Anmeldung: 21.02.2018
(73) Patentinhaber: Wacker Chemie AG, 81737 München (DE)
(72) Erfinder: MELCHIN, Timo, 84561 Mehring (DE); KÜNSTLE, Holger, 84489 Burghausen (DE); PFINGSTL, Doris, 84508 Burgkirchen (DE); TANGELDER, Robert, 1251 NR Laren (NL)
(74) Vertreter: Schuderer, Michael
(86) Internationale Anmeldenummer: PCT/EP2016/057861
(87) Internationale Veröffentlichungsnummer: WO 2016/166037

(56) Entgegenhaltungen:
- EP-A1- 0 851 015
- WO-A1-2012/049413
- WO-A1-2013/123210
- WO-A2-2015/079317
- US-A- 5 349 009

## Beschreibung

Die Erfindung betrifft die Verwendung von Gemischen enthaltend eine wässerige Dispersion eines Vinylacetat-Polymerisats und eine wässerige Dispersion eines Vinylacetat-Ethylen-Copolymerisats für Teppichbeschichtungs-Zusammensetzungen, entsprechende Teppichbeschichtungs-Zusammensetzungen sowie Teppiche, welche mit solchen Teppichbeschichtungs-Zusammensetzungen beschichtet sind.

Bei der Herstellung von typischen, kommerziell erhältlichen Teppichen, beispielsweise Bahnware oder Teppichfliesen, wird der Teppichflor aus Faserbüscheln (Tufts) gebildet, welche beispielsweise in Form von Schlaufen maschinell in ein gewebtes oder gelegtes Trägermaterial (primary backing) gesteckt werden. Die Schlaufen sind dabei nur lose mit dem flächigen Trägermaterial verbunden (Tufting-Teppich) und werden daher zur Stabilisierung des Rohteppichs mit einer bindemittelhaltigen Formulierung behandelt. Diese wird geschäumt oder ungeschäumt auf die Rückseite des Trägermaterials aufgetragen (Vorstrich oder Precoat) und enthält neben einer wässerigen Polymerdispersion als Bindemittel typischerweise noch Füllstoffe, wie beispielsweise Kreide, und gegebenenfalls weitere Zusatzstoffe, wie Verdicker, Dispergierhilfsmittel oder Schaumhilfsmittel.

Die so erhaltenen Teppich-Produkte können zur Verbesserung der Dimensionsstabilität mit einem weiteren Trägermaterial (Teppichrücken, secondary backing) ausgerüstet werden. Dabei handelt es sich im Allgemeinen um ein Gewebe aus Kunstfaser, wie Polypropylen, Polyamid oder Polyester, oder aus Naturfaser, wie Jute. Zur Anbindung des Teppichrückens an den nach dem Vorstrich erhaltenen Teppich wird erneut ein Bindemittel aufgetragen, welches ähnlich formuliert sein kann wie die Beschichtungsmasse des Vorstrichs. Auch in dieser zweiten Beschichtung können die vorgenannten wässerigen Polymerdispersionen, als Schaum oder ungeschäumt formuliert, mit Füllstoffen und weiteren Zusatzstoffen, wie Verdicker, Dispergierhilfsmittel oder Schaumhilfsmittel aufgetragen werden (Zweitstrich oder secondary coating).

Die WO 90/00967 A1 beschreibt die Verwendung von wässerigen Dispersionen von Vinylacetat-Ethylen-Copolymeren, Styrol-Butadien-Copolymeren oder Styrol-Acrylat-Copolymeren anstelle von PVC-Plastisol als Bindemittel bei der Teppichherstellung. Im US-Patent US 3,779,799 wird die Herstellung eines Tufting-Teppichs beschrieben, wobei als Vorstrich Bindemittel-Zusammensetzungen eingesetzt werden, welche als Bindemittel Vinylacetat-Ethylen-Copolymer-Dispersionen (VAE-Copolymer-Dispersion), Polyethylen-Dispersionen oder Dispersionen von carboxylierten Styrol-Butadien-Copolymeren enthalten. In der US 4,239,563 werden wässerige Vinylacetat-Ethylen-Copolymer-Dispersionen als Bindemittel zur Verfestigung von Teppichen beschrieben. Gegenüber Styrol-Butadien-Latices wird die geringere Emission von VOCs (volatile organic compounds) hervorgehoben. Das Patent US 4,735,986 beschreibt als Teppichbindemittel eine Zusammensetzung mit einer Vinylacetat-Ethylen-Copolymer-Dispersion, welche ein Stabilisatorgemisch aus teilhydrolysiertem PVOH, vollhydrolysiertem PVOH und einem nichtionischen, polyalkoxylierten Emulgator enthält. Das US-Patent US 5,026,765 beschreibt Teppichbeschichtungs-Zusammensetzungen basierend auf Vinylacetat-Ethylen-Copolymer-Dispersionen, wobei die Copolymere noch Monomereinheiten enthalten, deren Homopolymere Glasübergangstemperaturen Tg von mindestens 50°C aufweisen. Das GB-Patent GB 1,298,155 beschreibt Teppichbeschichtungs-Zusammensetzungen auf Basis von wässerigen, vernetzbaren Bindemitteln enthaltend Vinylacetat-EthylenCopolymere, Polyvinylalkohol (PVOH) und Glyoxal.

Aus der WO 2010/089142 A1 ist eine Vinylacetat-Ethylen-CopolymerDispersion bekannt, welche als Bindemittel bei der Teppichherstellung eingesetzt wird. Das Copolymer enthält 1 bis 4 Gew.-% Ethylen und ist ausschließlich mit Emulgator stabilisiert, wobei gegebenenfalls kleine Mengen an Schutzkolloid zur Stabilisierung mitverwendet werden können. Zum Vergleich wurde ein Vinylacetat-Homopolymer als Bindemittel getestet. Dieses führte zu Teppichen mit zu hoher Steifigkeit und unbefriedigendem 180° Bruchverhalten. Zur Verbesserung der Haftung an Polyvinylbutyralfolie (als Teppichrücken) wird in der WO 2006/007157 A1 der Einsatz von Vinylacetat-Ethylen-Copolymeren vorgeschlagen, welche noch 1 bis 10 Gew.-% an Comonomereinheiten mit funktionellen Gruppen enthalten, wie Carboxyl-, Amid-, N-Methylol- oder Hydroxyalkyl-Gruppen. Bei der Herstellung des Copolymers wird ein Gemisch aus Emulgator und 0,05 bis 4 Gew.-% Schutzkolloid eingesetzt. Im US-Patent 6,359,076 wird zur Verbesserung der Wasserfestigkeit von Teppichbeschichtungen vorgeschlagen, vernetzbare Vinylacetat-EthylenCopolymere, welche OH-funktionelle Monomereinheiten enthalten, in Kombination mit einem Vernetzer einzusetzen. Die WO 2011/139267 A1 und WO 2011/140065 A2 lehren Teppichbeschichtungen auf Basis von Vinylacetat-Ethylen-Copolymeren, die funktionelle, vernetzbare Comonomer-Einheiten, wie Silan-funktionelle oder multifunktionelle Comonomere, und zur Stabilisierung keine Schutzkolloide, sondern Emulgatoren enthalten. Aus der WO 2012/020319 A2 oder der WO 2012/020321 A2 sind Teppiche bekannt, welche sich durch gute Flammfestigkeit oder gute Waschbarkeit auszeichnen. Als Bindemittel wurden Vinylacetat-Ethylen-Copolymer-Dispersionen mit mittleren Teilchengrößen dw von 50 bis 500 nm eingesetzt, welche mittels Polymerisation unter Stabilisierung mit Emulgator eingestellt wurden, wobei gegebenenfalls noch bis zu 3 % Schutzkolloid als Costabilisator verwendet werden können. Gegenstand der WO 2013/093547 A2 sind Teppich-Bindemittel, deren Zusammensetzung für Rezepturen mit Ruß als Füllstoff optimiert ist. Als Bindemittel werden Emulgator- und Celluloseether-stabilisierte Vinylacetat-Ethylen-Copolymer-Dispersionen eingesetzt.

Die WO 2013/123210 A1 betrifft Teppiche, zu deren Herstellung Bindemittel-Gemische aus Vinylacetat-Ethylen-Copolymer-Dispersionen und Styrol-Butadien-Copolymer-Dispersionen eingesetzt wurden. Zur Verbesserung der Kompatibilität der verschiedenen Polymerdispersionen wird vorgeschlagen, bei der VAE-Dispersion auf Polyvinylalkohol zu verzichten und bei deren Herstellung allenfalls bis zu 1,5 Gew.-% Polyvinylalkohol, bezogen auf die Comonomere, als Schutzkolloid einzusetzen. Die WO 2014/031579 A2 betrifft Teppichbeschichtungs-Zusammensetzungen, die als Bindemittel unter anderem VAE-Dispersionen enthalten können, welche mit Emulgator stabilisiert sind und gegebenenfalls noch bis zu 1,5 Gew.-% Polyvinylalkohol als Costabilisator enthalten können. Diese Dispersionen werden mit einem alpha-Olefin-Carbonsäure-Copolymer und einem Vernetzer abgemischt.

US 5 349 009, WO 2012/049413 und EP 0 851 015 beschreiben weitere Klebstoffe und Klebemittel aus PVA und Vinylacetate-Ethylen Copolymeren.

Es besteht der Bedarf die Eigenschaften Vinylacetat-Ethylen-basierter Bindemittel zur Formulierung von Performanz-balancierten Teppichbeschichtungsmassen weiterzuentwickeln. Ein Versuch waren hier die bereits in der WO 2013/123210 A1 genannten Bindemittelgemische auf Basis von Vinylacetat-Ethylen-Copolymer-Dispersionen und Styrol-Butadien-Copolymer-Dispersionen. Solche Gemische zeichnen sich durch hohe Noppenauszugswerte bei den eingesetzten Bindemittelmischungen aus. Die Vinylacetat-Ethylen-Copolymerdispersion enthält allerdings immer einen Emulgator, welcher die Füllstoffverträglichkeit und die mechanische Festigkeit, insbesondere die Trennfestigkeiten, negativ beeinflusst . Reine Schutzkolloid-stabilisierte Vinylacetat-Ethylen-Copolymerdispersionen, beispielsweise mit teilverseiftem Polyvinylalkohol oder modifizierten und/oder unmodifizierten Cellulosen, weisen demgegenüber gute Füllstoffverträglichkeiten und hohe mechanische Festigkeiten auf, sind im Allgemeinen jedoch wenig kompatibel mit Styrol-Butadien-Copolymerdispersionen und neigen in Mischungen ohne Einsatz spezieller Emulgatoren und/oder starker Verdünnung zu dramatischen Viskositätsanstiegen oder Koagulation.

Der Einsatz von Vinylacetat-Ethylen-Copolymeren als Bindemittel in Teppichrückenbeschichtungen ermöglicht zwar die Einstellung der Festigkeit des finalen Teppichs mittels Steuerung der Glasübergangstemperatur des Polymerisates, bestimmte Einstellungen bleiben dabei dennoch unzugänglich. Besonders hohe Festigkeiten sind dabei nur schwer zugänglich und die Anpassung des Bindemittels an die Erfordernisse des Endproduktes mit breiter Variation bezüglich Festigkeit würde zu einer kommerziell unattraktiven Vielzahl von Produkten führen. Es besteht daher der Bedarf nach einem Produkt, welches die Einstellung der Festigkeiten im fertigen Teppich mit mischstabilisierten (Emulgator und Schutzkolloid) oder rein schutzkolloidstabilisierten Vinylacetat-Ethylen-Copolymeren ermöglicht, dabei ohne Weichmacher oder Filmbildehilfsmittel auskommt, und die mechanischen Festigkeiten des Vinylacetat-Ethylen-Copolymer enthaltenden Bindemittels in der Teppichrückenbeschichtung verbessert.

Überraschenderweise gelang es das Anforderungsprofil durch den Einsatz von Mischungen aus Vinylacetat-Ethylen-Copolymerdispersionen und Vinylacetat-Homopolymerdispersionen zu erfüllen, wobei sich überraschende synergistisch verstärkende Effekte in Bezug auf die Noppenauszugskraft und Trennfestigkeit gegenüber den nicht als Mischung eingesetzten Dispersionen ergaben. Die Beschichtungsmassenzusammensetzungen ermöglichen überraschend und in unerwarteter Weise die Einstellung spezifischer Festigkeiten des fertigen Teppichs bei hohen Trennfestigkeiten und hohen Noppenauszugskräften.

Gegenstand der Erfindung gemäß Ansprüche 1 bis 7 ist die Verwendung von Gemischen enthaltend eine wässerige Dispersion eines Vinylacetat-Polymerisats und eine wässerige Dispersion eines Vinylacetat-Ethylen-Copolymerisats für Teppichbeschichtungs-Zusammensetzungen.

Das Vinylacetat-Polymerisat wird mittels radikalisch initiierter Emulsionspolymerisation in wässerigem Medium von 99 bis 100 Gew.-% Vinylacetat und gegebenenfalls bis zu 1 Gew.-% weiterer Comonomere, jeweils bezogen auf das Gesamtgewicht der Monomere, erhalten. Die Angaben in Gew.-% für die Comonomere addieren sich jeweils auf 100 Gew.-%. Das Vinylacetat-Polymerisat enthält vorzugsweise keine Ethyleneinheiten. Besonders bevorzugt werden zusätzlich zu Vinylacetat keine weiteren Comonomere polymerisiert.

Das Vinylacetat-Ethylen-Copolymerisat wird mittels radikalisch initiierter Emulsionspolymerisation in wässerigem Medium von 65 bis 98 Gew.-% Vinylacetat und 2 bis 30 Gew.-% Ethylen, vorzugsweise 75 bis 95 Gew.-% Vinylacetat und 5 bis 25 Gew.-% Ethylen, jeweils bezogen auf das Gesamtgewicht der Monomere, erhalten. Gegebenenfalls können noch bis zu 10 Gew.-%, vorzugsweise 0,1 bis 10 Gew.-%, jeweils bezogen auf das Gesamtgewicht der Monomere, noch weitere Comonomere copolymerisiert werden. Besonders bevorzugt werden keine weiteren Comonomere copolymerisiert. Die Angaben in Gew.-% für die Comonomere addieren sich jeweils auf 100 Gew.-%.

Geeignete weitere Comonomere für das Vinylacetat-Polymerisat oder das Vinylacetat-Ethylen-Copolymerisat sind jeweils solche aus der Gruppe der Vinylester mit 3 bis 12 C-Atomen im Carbonsäurerest wie Vinylpropionat, Vinyllaurat, Vinylester von alpha-verzweigten Carbonsäuren mit 8 bis 11 C-Atomen wie VeoVa^{R}EH, VeoVa^{R}9 oder VeoVa^{R}10 (Handelsnamen der Fa. Resolution). Geeignet sind auch Methacrylsäureester oder Acrylsäureester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Geeignet sind auch Vinylhalogenide wie Vinylchlorid.

Geeignete weitere Comonomere sind auch ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch Monomere mit Hydroxy- oder CarboxylGruppen, wie beispielsweise Methacrylsäure- und Acrylsäurehydroxyalkylester wie Hydroxyethyl-, Hydroxypropyl- oder Hydroxybutylacrylat oder -methacrylat sowie 1,3-Dicarbonylverbindungen wie Acetacetoxyethylacrylat, Acetacetoxypropylmethacrylat, Acetacetoxyethylmethacrylat, Acetacetoxybutylmethacrylat, 2,3-Di(acetacetoxy)propylmethacrylat und Acetessigsäureallylester.

Geeignete weitere Comonomere sind auch epoxidfunktionelle Comonomere wie Glycidylmethacrylat, Glycidylacrylat, Allylglycidether, Vinylglycidether. Weitere Beispiele für geeignete weitere Comonomere sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, vorzugsweise mit Alkyl- bzw. Alkoxygruppen mit jeweils 1 bis 2 C-Atomen, beispielsweise Vinyltrimethoxysilan, Vinyltriethoxysilan, 3-Methacryloxypropyltrimethoxysilan.

Die Monomerauswahl erfolgt dabei so, dass das Vinylacetat-Polymerisat im Allgemeinen eine Glasübergangstemperatur Tg von +25°C bis +40°C aufweist und das Vinylacetat-Ethylen-Copolymerisat im Allgemeinen eine Glasübergangstemperatur Tg von -20°C bis +20°C aufweist. Die Glasübergangstemperatur Tg der Polymerisate kann in bekannter Weise mittels DSC (Dynamische Differenz-Thermoanalyse, DIN EN ISO 11357-1/2), bestimmt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung des Vinylacetat-Polymerisats oder des Vinylacetat-Ethylen-Copolymerisats erfolgt jeweils in bekannter Weise, vorzugsweise mittels radikalisch initiierter Emulsionspolymerisation in Wasser. Dabei werden die wässerige Dispersion des Vinylacetat-Polymerisats und die wässrige Dispersion des Vinylacetat-Ethylen-Polymerisats jeweils in getrennten Polymerisationsverfahren hergestellt.

Die Polymerisationstemperatur beträgt jeweils 40°C bis 120°C, vorzugsweise 60°C bis 90°C. Bei der Copolymerisation von gasförmigen Comonomeren, wie Ethylen, wird vorzugsweise unter Druck, im Allgemeinen zwischen 5 bar und 120 bar, gearbeitet. Die Initiierung der Polymerisation kann mit den für die Emulsionspolymerisation gebräuchlichen Initiatoren, wie Hydroperoxid oder t-Butylhydroperoxid, oder Redox-Initiator-Kombinationen, mit Reduktionsmitteln, wie (Iso)Ascorbinsäure oder Na-Hydroxymethansulfinat (Brüggolit FF), erfolgen. Zur Steuerung des Molekulargewichts können während der Polymerisation regelnde Substanzen eingesetzt werden.

Die Polymerisation des Vinylacetat-Polymerisats erfolgt in Gegenwart von Schutzkolloid, gegebenenfalls in Kombination mit Emulgator. Die Polymerisation des Vinylacetat-Ethylen-Copolymerisats erfolgt in Gegenwart von Schutzkolloid oder in Gegenwart von Emulgator oder in Gegenwart einer Kombination von Schutzkolloid und Emulgator.

Zur Stabilisierung des Polymerisationsansatzes gebräuchliche Schutzkolloide sind beispielsweise teilverseifte oder vollverseifte Polyvinylalkohole; Polyvinylpyrrolidone; Polyvinylacetale; Polysaccharide in wasserlöslicher Form wie Stärken, Cellulosen oder deren Derivate, wie Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden Cellulosen oder deren Derivate, oder teilverseifte Polyvinylalkohole mit einem Hydrolysegrad von 80 bis 95 Mol-% und einer Höpplerviskosität in 4 %-iger wässriger Lösung von 1 bis 40 mPas, insbesondere 3 bis 30 mPas (Methode nach Höppler bei 20°C, DIN 53015). Besonders bevorzugt werden teilverseifte, niedermolekulare Polyvinylalkohole mit einem Hydrolysegrad von jeweils vorzugsweise 80 bis 95 Mol-%, besonders bevorzugt 85 bis 90 Mol-% am meisten bevorzugt 87 bis 89 Mol-%, und einer Höppler-Viskosität von jeweils vorzugsweise 1 bis 5 mPas und besonders bevorzugt 2 bis 4 mPas (Bestimmung nach DIN 53015, Methode nach Höppler, bei 20°C, in 4 %-iger wässriger Lösung).

Gegebenenfalls können auch teilverseifte, höhermolekulare Polyvinylalkohole mit einem Hydrolysegrad von vorzugsweise 80 bis 95 Mol-% und einer Höppler-Viskosität in 4 %-iger wässriger Lösung von vorzugsweise > 5 bis 40 mPas, besonders bevorzugt 8 bis 40 mPas (Methode nach Höppler bei 20°C, DIN 53015) im Gemisch mit den teilverseiften, niedermolekularen Polyvinylalkoholen eingesetzt werden. Gegebenenfalls können auch vollverseifte, höhermolekulare Polyvinylalkohole mit einem Hydrolysegrad von vorzugsweise 96 bis 100 Mol-%, insbesondere 98 bis 100 Mol-%, und einer Höppler-Viskosität in 4 %-iger wässriger Lösung von vorzugsweise 10 bis 56 mPas (Methode nach Höppler bei 20°C, DIN 53015) im Gemisch mit den teilverseiften, niedermolekularen Polyvinylalkoholen eingesetzt werden. Die teilverseiften, höhermolekularen Polyvinylalkohole und/oder die vollverseiften, höhermolekularen Polyvinylalkohole werden dabei jeweils in einer Menge von 0,1 bis 4 Gew.-%, jeweils bezogen auf das Gesamtgewicht der Comonomere, eingesetzt.

Bevorzugt sind auch modifizierte Polyvinylalkohole, im Folgenden auch X-PVOH genannt, mit einem Hydrolysegrad von 80 bis 99,9 Mol-%, bevorzugt von 85 bis 95 Mol.-%, und einer Höpplerviskosität, in 4 %-iger wässriger Lösung von 1 bis 30 mPas (Bestimmung nach DIN 53015 bei 20°C). Beispiele hierfür sind funktionelle Gruppen tragende Polyvinylalkohole, wie Acetoacetyl-Gruppen. Bevorzugt sind auch EthylenEinheiten enthaltende Polyvinylalkohole, sogenannte E-PVOH, die beispielsweise unter dem Handelsnamen EXCEVAL® bekannt sind. E-PVOH sind teil- oder vorzugsweise vollverseifte Copolymerisate von Vinylacetat und Ethylen. Bevorzugte E-PVOH haben einen Ethylen-Anteil 0,1 zu 12 Mol-%, bevorzugt 1 bis 7 Mol-%, besonders bevorzugt 2 bis 6 Mol-% und insbesondere 2 bis 4 Mol-%. Der massemittlere Polymerisationsgrad beträgt 500 bis 5000, bevorzugt 2000 bis 4500 und besonders bevorzugt 3000 bis 4000. Der Hydrolysegrad ist im Allgemeinen größer als 92 Mol-%, bevorzugt 94,5 bis 99,9 Mol-% und besonders bevorzugt 98,1 bis 99,5 Mol-%.

Die Schutzkolloide sind im Handel erhältlich und mittels dem Fachmann bekannter Verfahren zugänglich. Es können auch Gemische der genannten Schutzkolloide eingesetzt werden. Die Polymerisation erfolgt vorzugsweise in Gegenwart von insgesamt 2 bis 10 Gew.-% Schutzkolloid, besonders bevorzugt insgesamt 5 bis 10 Gew.-%, jeweils bezogen auf das Gesamtgewicht der Monomere.

Zur Stabilisierung der Dispersion werden bevorzugt nichtionische Emulgatoren eingesetzt. Es können auch ionische, vorzugsweise anionische, Emulgatoren verwendet werden. Es können auch Kombinationen von nichtionischen Emulgatoren mit anionischen Emulgatoren eingesetzt werden. Die Emulgatormenge beträgt im Allgemeinen 0,1 bis 5,0 Gew.-%, bezogen auf das Gesamtgewicht der Comonomeren.

Geeignete nichtionische Emulgatoren sind beispielsweise Acyl-, Alkyl-, Oleyl- und Alkylarylethoxylate. Diese Produkte sind beispielsweise im Handel unter der Bezeichnung Genapol^{R} oder Lutensol^{R} erhältlich. Hierunter fallen ethoxylierte Mono-, Di- und Tri-Alkylphenole, vorzugsweise mit einem Ethoxylierungsgrad von 3 bis 50 Ethylenoxid-Einheiten und C₄- bis C₁₂-Alkylresten; sowie ethoxylierte Fettalkohole, vorzugsweise mit einem Ethoxylierungsgrad von 3 bis 80 Ethylenoxid-Einheiten und C₈- bis C₃₆-Alkylresten. Geeignete nichtionische Emulgatoren sind auch C₁₃-C₁₅-Oxoalkoholethoxylate mit einem Ethoxylierungsgrad von 3 bis 30 Ethylenoxid-Einheiten, C₁₆-C₁₈-Fettalkoholethoxylate mit einem Ethoxylierungsgrad von 11 bis 80 Ethylenoxid-Einheiten, C₁₀-Oxoalkoholethoxylate mit einem Ethoxylierungsgrad von 3 bis 11 Ethylenoxid-Einheiten, C₁₃-Oxoalkoholethoxylate mit einem Ethoxylierungsgrad von 3 bis 20 Ethylenoxid-Einheiten, Polyoxyethylensorbitanmonooleat mit 20 Ethylenoxidgruppen, Copolymere aus Ethylenoxyd und Propylenoxyd mit einem Mindestgehalt von 10 Gew.-% Ethylenoxid, Polyethylenoxid-Ether von Oleylalkohol mit einem Ethoxylierungsgrad von 4 bis 20 Ethylenoxid-Einheiten sowie die Polyethylenoxid-Ether von Nonylphenol mit einem Ethoxylierungsgrad von 4 bis 20 Ethylenoxid-Einheiten.

Besonders bevorzugt sind C₁₂-C₁₄-Fettalkoholethoxylate mit einem Ethoxylierungsgrad von 3 bis 30 Ethylenoxid-Einheiten.

Beispiele für geeignete anionische Emulgatoren sind Natrium-, Kalium- und Ammoniumsalze von geradkettigen aliphatischen Carbonsäuren mit 12 bis 20 C-Atomen; Natriumhydroxyoctadecansulfonat; Natrium-, Kalium- und Ammoniumsalze von Hydroxyfettsäuren mit 12 bis 20 C-Atomen und deren Sulfonierungs- und/oder Acetylierungsprodukte; Natrium-, Kalium- und Ammoniumsalze von Alkylsulfaten, auch als Triethanolaminsalze, und Natrium-, Kalium- und Ammoniumsalze von Alkylsulfonaten mit jeweils 10 bis 20 C-Atomen und von Alkylarylsulfonaten mit 12 bis 20 C-Atomen; Dimethyl-dialkylammoniumchlorid mit 8 bis 18 C-Atomen im Alkylrest und deren Sulfonierungsprodukte; Natrium-, Kalium- und Ammoniumsalze von Sulfobernsteinsäureestern mit aliphatischen gesättigten einwertigen Alkoholen mit 4 bis 16 C-Atomen und von Sulfobernsteinsäure-4-Ester mit Polyethylenglykolethern von einwertigen aliphatischen Alkoholen mit 10 bis 12 C-Atomen, insbesondere deren Di-Natriumsalze; Natrium-, Kalium- und Ammoniumsalze von Sulfobernsteinsäure-4-Ester mit Polyethylenglykolnonylphenylether, insbesondere dessen Di-Natriumsalz; Natrium-, Kalium- und Ammoniumsalze von Sulfobernsteinsäure-bis-cyclohexylester, insbesondere dessen Natriumsalz; Ligninsulfonsäure sowie deren Calcium-, Magnesium-, Natrium- und Ammoniumsalze; Harzsäuren sowie hydrierte und dehydrierte Harzsäuren sowie deren Alkalisalze.

Bei der Herstellung der wässerigen Dispersion des Vinylacetat-Polymerisats werden vorzugsweise während der Polymerisation keine Emulgatoren verwendet, und auch keine Emulgatoren nachträglich zugegeben.

Die Polymerisation wird im Allgemeinen jeweils bis zu einem Umsatz von > 95 Gew.-%, vorzugsweise bis zu einem Umsatz von 95 bis 99 Gew.-%, der unter Polymerisationsbedingungen flüssigen Monomere geführt. Die damit erhältlichen wässerigen Dispersionen des Vinylacetat-Polymerisats oder des Vinylacetat-Ethylen-Copolymerisats haben jeweils einen Feststoffgehalt von 30 bis 75 Gew.-%, vorzugsweise von 50 bis 65 Gew.-%. Geeignete wässrige Dispersionen von Vinylacetat-Polymerisaten oder von Vinylacetat-Ethylen-Copolymerisaten sind auch im Handel erhältlich. Beispielsweise die Vinnapas^{R}-Dispersionen der Wacker Chemie AG.

Die Gemische enthalten mindestens eine wässerige Dispersion eines Vinylacetat-Polymerisats und mindestens eine wässerige Dispersion eines Vinylacetat-Ethylen-Copolymerisats mit einem Gewichtsanteil von vorzugsweise 10 bis 60 Gew.-%, besonders bevorzugt 10 bis 40 Gew.-%, am meisten bevorzugt 20 bis 30 Gew.-% Vinylacetat-Polymerisat, jeweils bezogen auf das Gesamtgewicht von Vinylacetat-Polymerisat und Vinylacetat-Ethylen-Copolymerisat (trocken/trocken). Der Gewichtsanteil des Vinylacetat-Polymerisats kann in Abhängigkeit von der Glasübergangstemperatur Tg des Vinylacetat-Ethylen-Copolymerisats variieren. Je niedriger dessen Tg ist umso höher kann der Anteil des Vinylacetat-Polymerisats gewählt werden.

Ein weiterer Gegenstand der Erfindung gemäß Anspruch 8 sind Teppichbeschichtungs-Zusammensetzungen hergestellt aus
einem Gemisch enthaltend eine wässerige Dispersion eines Vinylacetat-Polymerisats und eine wässerige Dispersion eines Vinylacetat-Ethylen-Copolymerisats,
100 bis 1400 Gew.-% Füllstoffen, bezogen auf das Gewicht des Gemisches von Vinylacetat-Polymerisat und Vinylacetat-Ethylen-Copolymerisat (trocken/trocken),
Wasser,
gegebenenfalls einem oder mehreren Additiven und gegebenenfalls einem oder mehreren Zusatzstoffen, und wobei das Vinylacetat-Ethylen-Copolymerisat mittels radikalisch initiierter Emulsionspolymerisation in wässerigem Medium von 65 bis 98 Gew.-% Vinylacetat und 2 bis 30 Gew.-% Ethylen, und gegebenen falls bis zu 10 Gew.-% weiterer Comonomere, jeweils bezogen auf das Gesamtgewicht der Monomere, erhalten wird, dadurch gekennzeichnet, dass das Gemisch aus den wässerigen Dispersionen und dem Füllstoff, vor der Zugabe von Additiven und Zusatzstoffen, bei einem Feststoffgehalt von 75 bis 85 Gew.-% eine Brookfield Viskosität von < 7000 mPas aufweist. Die Teppichbeschichtungs-Zusammensetzungen haben nach Zugabe von Füllstoffen und in Abwesenheit von Additiven oder Zusatzstoffen eine Brookfield-Viskosität von ≤ 7000 mPas, besonders bevorzugt ≤ 3000 mPas (Messung mit Brookfield RV Messgerät mit Spindel 4, 20 Upm, bei 25°C).

Geeignete Füllstoffe sind beispielsweise Kaolin, Talk, Flussspat, Flugasche, Aluminiumtrihydrat, vorzugsweise Kreide.

Beispiele für Additive sind Verdickungsmittel, wie Polyacrylate oder Celluloseether, oder Schaumhilfsmittel. Im Falle des Schaumauftrags werden vorzugsweise Schaumhilfsmittel zugegeben. Verdickungsmittel können zur Einstellung der Zielviskosität der Teppichbeschichtungs-Zusammensetzungen zugegeben werden. Im Allgemeinen reicht dazu eine Menge an Verdickungsmittel von 0,1 bis 6 Gew.-% und vorzugsweise 1 bis 3 Gew.-%, jeweils bezogen auf das Gewicht des Gemisches von Vinylacetat-Polymerisat und Vinylacetat-Ethylen-Copolymerisat (trocken/trocken). Vorzugsweise wird auf diese Weise eine Brookfield-Viskosität von 2000 bis 10000 mPas eingestellt (Messung mit Brookfield RV Messgerät mit Spindel 4, 20 Upm, bei 25°C). Bei der erfindungsgemäßen Vorgehensweise kann aber auch auf Verdickungsmittel verzichtet werden.

Übliche Zusatzstoffe sind beispielsweise Dispergiermittel, Netzmittel, Pigmente, Hydrophobierungsmittel oder Biozide, wie Formaldehyd-Depotstoffe, Isothiazolinone, Phenole oder quartäre Ammoniumverbindungen. Die Teppichbeschichtungs-Zusammensetzungen enthalten vorzugsweise keine Weichmacher oder Filmbildehilfsmittel.

Die Teppichbeschichtungs-Zusammensetzungen enthalten 100 bis 1400 Gew.-Teile Füllstoff auf 100 Teile des Gemisches von Vinylacetat-Polymerisat und Vinylacetat-Ethylen-Copolymerisat (trocken/trocken).

Dies wird auch als Füllgrad von 100 % bis 1400 % bezeichnet. Die Menge an Füllstoffen in der Formulierung kann in Abhängigkeit von den gewünschten Beschichtungseigenschaften variieren. Je höher der Füllstoffanteil (Füllgrad) umso geringer sind die mechanischen Eigenschaften.

Die erfindungsgemäßen Teppichbeschichtungs-Zusammensetzungen zeichnen sich durch eine hohe Füllstoffverträglichkeit aus. So werden Teppichbeschichtungs-Zusammensetzungen zugänglich, beispielsweise bestehend aus Polymerdispersion, Füllstoffen und Wasser, welche bei Füllgraden von 400 Gew.-% bis 1400 Gew.-% Füllstoff, bezogen auf das Gemisch von Vinylacetat-Polymerisat und Vinylacetat-Ethylen-Copolymerisat (trocken / trocken), und bei einem Feststoffgehalt von 75 bis 85 Gew.-% eine Brookfield-Viskosität von < 7000 mPas und besonders bevorzugt von < 3000 mPa s aufweisen (Messung mit Brookfield RV Messgerät mit Spindel 4, 20 Upm, bei 25°C).

Ist die Viskosität einer Teppichbeschichtungs-Zusammensetzung vor Zugabe des Verdickungsmittels höher, verlängern sich die Einarbeitungszeiten für den Füllstoff, was im industriellen Maßstab im Allgemeinen inakzeptabel ist, und es besteht die Gefahr der Bildung von nicht dispergierten Füllstoffklumpen, die das Teppichgewebe zerstören können.

Für den Vorstrich werden vorzugsweise Teppichbeschichtungs-Zusammensetzungen mit Füllgraden von 300 % bis 1400 % verwendet. Besonders bevorzugt sind Füllgrade von 600 % bis 1000 % für Vorstriche für Wohnanwendungen und 300 % bis 600 % für kommerzielle Anwendungen, wie Büro, Hotel oder Schiffe.

Für den Zweitstrich werden vorzugsweise Teppichbeschichtungs-Zusammensetzungen mit Füllgraden von 275 % bis 600 % für Wohnanwendungen und 200 % bis 275 % für kommerzielle Anwendungen, wie Büro, Hotel oder Schiffe, verwendet.

Zur Herstellung der Teppichbeschichtungs-Zusammensetzungen kann so vorgegangen werden, dass die wässerige Dispersion des Vinylacetat-Polymerisats und die wässerige Dispersion des Vinylacetat-Ethylen-Copolymerisats gemischt werden und anschließend die Füllstoffe eingerührt werden. Etwaige Additive und Zusatzstoffe können generell zu einem beliebigen Zeitpunkt, vorzugsweise vor Zugabe von Füllstoffen zugegeben werden. Für das Herstellen der Teppichbeschichtungs-Zusammensetzungen ist das hierfür etablierte, dem Fachmann bekannte Equipment geeignet.

Ein weiterer Gegenstand der Erfindung gemäß Anspruch 9 sind Teppiche, welche mit einer oder mehreren erfindungsgemäßen Teppichbeschichtungs-Zusammensetzungen im Vorstrich und/oder Zweitstrich beschichtet sind.

Die Teppichbeschichtungs-Zusammensetzungen können vorteilhafterweise nach bekannten Verfahren in bestehenden Anlagen zur Teppichherstellung eingesetzt werden.

Die Teppichbeschichtungs-Zusammensetzungen sind geeignet zur Verfestigung von Teppichen, beispielsweise Bahnwaren oder Teppichfliesen. Die Teppichbeschichtungs-Zusammensetzungen können zur Herstellung von Tufting-Teppichen, Webteppichen oder Nadelfilzteppichen verwendet werden.

Die nachfolgenden Beispiele dienen der weiteren Erläuterung der Erfindung:

### Methoden:

### Bestimmung der Glasübergangstemperatur Tg:

Die Glasübergangstemperatur Tg der Polymerisate wurde mittels DSC (Dynamische Differenz-Thermoanalyse, DIN EN ISO 11357-1/2) mit dem dynamischen Differenzkalorimeter DSC 1 der Firma Mettler-Toledo im offenen Tiegel bei einer Heizrate von 10 K/min bestimmt. Als Glasübergangstemperatur ausgewertet wurde die Temperatur am Mittelpunkt der zweiten Aufheizkurve (Mittelpunkt = halbe Stufenhöhe).

### Bestimmung der Brookfield-Viskosität:

Die Bestimmung der Brookfield-Viskositäten der wässrigen Polymerdispersionen erfolgte mit einem Brookfield RV Viskosimeter, nach Temperierung auf die angegebene Temperatur, unter Verwendung der jeweils angegebenen Spindel, bei der angegebenen Anzahl von Umdrehungen pro Minute. Die Viskosität wird in mPas angegeben.

### Bestimmung der Teilchengröße Dw:

Mittlere Partikeldurchmesser Dw bestimmt mit dem Messgerät Beckmann Coulter® LS nach ISO 13320.

### Beispiele:

### Dispersion A (A)

Folgende Komponenten wurden in einem mit Stickstoff gespülten 572-Liter-Druckreaktor vorgelegt:
125,2 kg deionisiertes Wasser,
56,0 kg einer 20 Gew.-%-igen wässerigen Lösung eines Polyvinylalkohols mit einem mittleren Hydrolysegrad von 88 Mol-% und einer Höppler-Viskosität von 4 mPas (Bestimmung nach DIN 53015, bei 20°C, in 4 %-iger wässriger Lösung),
26,1 kg einer 25 Gew.-%-igen wässerigen Lösung eines Fettalkoholethoxylates mit einem einem mittleren Ethoxylierungsgrad von 30 Mol EO-Einheiten,
241,7 kg Vinylacetat,
0,48 kg einer 1,0 Gew.-%-igen wässerigen Ammoniumeisensulfat-Lösung.

Die Vorlage wurde mit 250 mL Ameisensäure (98 Gew.-%-ig) auf einen pH Wert von 4,0 eingestellt.

Unter Rühren (240 Upm) wurde die Vorlage auf 35°C aufgeheizt und Ethylen bis zu einem Druck von 30 bar aufgedrückt. Bei Erreichen der Temperatur von 35°C und einem Druck von 30 bar wurden die Initiatordosierungen, bestehend aus einer wässerigen 3,5 Gew.-%-igen Wasserstoffperoxid-Lösung und einer wässerigen 10 Gew.-%-igen Natrium-Isoascorbat-Lösung, mit jeweils 700 g/h gestartet. Nach Reaktionsstart (10 Minuten nach Start Initiatordosierung), deutlich erkennbar am Anstieg der Reaktorinnentemperatur, wurde die Reaktorinnentemperatur mit Hilfe der freiwerdenden Reaktionswärme auf 85°C angehoben. Parallel wurde 10 Minuten nach Reaktionsbeginn eine Vinylacetatdosierung mit 35,1 kg/h gestartet (Dosierzeit 120 min, 70,2 kg). Bei Erreichen einer Reaktorinnentemperatur von 80°C wurde Ethylen bis zu einem Solldruck von 58 bar nachgeführt, bis eine Gesamtethylenmenge von 52,8 kg dosiert war.

Nach Ende der Vinylacetatdosierungen wurden die Initiatordosierungen noch 30 Minuten mit jeweils 2000 g/h nachdosiert, wobei der Druck auf 20 bar abfiel. Anschließend wurde der Ansatz auf 70°C abgekühlt und in einen Drucklosreaktor (Niederdruckreaktor) überführt und dort bei einem Druck von 700 mbar abs. durch Zugabe von 2,6 kg tert.-Butylhydroperoxid-Lösung (10 Gew.-% in Wasser) und 2,6 kg Natrium-Isoascorbat-Lösung (10 Gew.-% in Wasser) nachpolymerisiert.

| | |
|---|---|
| Festgehalt: | 63 Gew.-% |
| Brookfield-Viskosität: | 1300 mPas (Spindel 2, 20 Upm, 23°C) |
| Teilchengröße: | Dw 1,0 µm, (Coulter LS) |
| Glasübergangstemperatur: | 7,0°C (DSC) |
| Schutzkolloid: | 3,1 Gew.-%, bezogen auf Comonomere |
| Emulgator: | 1,8 Gew.-% bezogen auf Comonomere |

### Dispersion B (B)

Eine wässerige Dispersion eines Vinylacetat-Homopolymerisats mit einer Glasübergangstemperatur von 33°C und mit einem Feststoffgehalt der Dispersion von 55 Gew.-%, stabilisiert mit 6 Gew.-% eines Polyvinylalkohols mit einem mittleren Hydrolysegrad von 88 Mol-% und einer Höppler-Viskosität von 5 mPas (Bestimmung nach DIN 53015, bei 20°C, in 4 %-iger wässriger Lösung), und 2,0 Gew.-% eines Polyvinylalkohols mit einem mittleren Hydrolysegrad von 88 Mol-% und einer Höppler-Viskosität von 50 mPas (Bestimmung nach DIN 53015, bei 20°C, in 4 %-iger wässriger Lösung), wobei die Angaben in Gew.-% jeweils auf das Vinylacetat-Homopolymerisat bezogen sind.

### Dispersion D (D)

Wie Dispersion B (Vinylacetat-Homopolymerdispersion, Tg = 33°C, FG = 55 %) aber mit 7,0 Gew.-% eines Polyvinylalkohols mit einem mittleren Hydrolysegrad von 88 Mol-% und einer Höppler-Viskosität von 4 mPas (Bestimmung nach DIN 53015, bei 20°C, in 4 %-iger wässriger Lösung) wobei die Angaben in Gew.-% jeweils auf das Vinylacetat-Homopolymerisat bezogen sind.

### Dispersion E (E)

Folgende Komponenten wurden in einem mit Stickstoff gespülten 590-Liter-Druckreaktor vorgelegt:
134,9 kg deionisiertes Wasser,
75,9 kg einer 20 Gew.-%-igen wässerigen Lösung eines Polyvinylalkohols mit einem mittleren Hydrolysegrad von 88 Mol-% und einer Höppler-Viskosität von 4 mPas (Bestimmung nach DIN 53015, bei 20°C, in 4 %-iger wässriger Lösung),
12,5 kg einer 10 Gew.-%-igen wässerigen Lösung eines Polyvinylalkohols mit einem mittleren Hydrolysegrad von 88 Mol-% und einer Höppler-Viskosität von 23 - 26 mPas (Bestimmung nach DIN 53015, bei 20°C, in 4 %-iger wässriger Lösung),
224 kg Vinylacetat,
0,48 kg einer 1,0 Gew.-%-igen wässerigen Ammoniumeisensulfat-Lösung.

Die Vorlage wurde mit 250 mL Ameisensäure (98 Gew.-%-ig) auf einen pH Wert von 4,0 eingestellt.

Unter Rühren (240 Upm) wurde die Vorlage auf 55°C aufgeheizt und Ethylen bis zu einem Druck von 20 bar aufgedrückt. Bei Erreichen der Temperatur von 55°C und einem Druck von 20 bar wurden die Initiatordosierungen, bestehend aus einer wässerigen 3 Gew.-%-igen tert-Butylhydroperoxid-Lösung und einer wässerigen 5 Gew.-%-igen Ascorbinsäure-Lösung, mit jeweils 700 g/h gestartet. Nach Reaktionsstart, deutlich erkennbar am Anstieg der Reaktorinnentemperatur, wurden die Reaktorinnentemperatur mit Hilfe der freiwerdenden Reaktionswärme auf 90°C und der Druck auf 48 bar angehoben. Die Initiatordosierungen wurden zur Kontrolle der Reaktionswärme jeweils auf 350 g/h reduziert.

45 Minuten nach Reaktionsbeginn wurden eine Vinylacetat- und eine Polyvinylalkohol-Dosierung gestartet. Vinylacetat wurde innerhalb von 90 Minuten mit einer Rate von 40 kg/h (= 60 kg Vinylacetat) in den Reaktor dosiert, der Polyvinylalkohol, bestehend aus einer 10 Gew.-%-igen wässerigen Lösung eines Polyvinylalkohols mit einem mittleren Hydrolysegrad von 88 Mol-% und einer Höppler Viskosität von 4 mPas (Bestimmung nach DIN 53015, bei 20°C, in 4 %-iger wässriger Lösung), wurde innerhalb von 120 Minuten mit einer Rate von 14 kg/h (= 28,0 kg wässerige Polyvinylalkohol Lösung). Ethylen wurde während der Polymerisation bei einem Solldruck von 44 bar nachdosiert, bis eine Gesamtethylenmenge von 34 kg dosiert war.

Nach Ende der Dosierungen wurden die Initiatordosierungen noch 30 Minuten mit jeweils 1300 g/h nachdosiert, wobei der Druck auf 20 bar abfiel. Anschließend wurde der Ansatz auf 65°C abgekühlt und in einen Drucklosreaktor (Niederdruckreaktor) überführt und dort bei einem Druck von 700 mbar abs. durch Zugabe von 1 kg tert.-Butylhydroperoxid-Lösung (10 Gew.-% in Wasser) und 2 kg Ascorbinsäure-Lösung (5 Gew.-% in Wasser) nachpolymerisiert.

| | |
|---|---|
| Festgehalt: | 58 Gew.-% |
| Brookfield-Viskosität: | 1800 mPas (Spindel 2, 20 Upm, 23°C) |
| Teilchengröße: | Dw 1,0 µm, (Coulter LS) |
| Glasübergangstemperatur: | 15,0°C (DSC) |
| Schutzkolloid: | 6,2 Gew.-%, bezogen auf Comonomere |

### Dispersion C (C)

Wie Dispersion E, jedoch mit folgendem Monomerverhältnis: 77 Gew.-% Vinylacetat und 23 Gew.-% Ethylen.

| | |
|---|---|
| Festgehalt: | 54 Gew.-% |
| Brookfield-Viskosität: | 280 mPas (Spindel 1, 20 Upm, 23°C) |
| Teilchengröße: | Dw 1,0 µm, (Coulter LS) |
| Glasübergangstemperatur: | -6,0°C (DSC) |
| Schutzkolloid: | 6,3 Gew.-%, bezogen auf Comonomere |

### Vergleichsdispersion 1 (V1)

Styrol-Butadien-Latex DL 535 (DOW Chemical Company)

| | |
|---|---|
| Festgehalt: | 49,5 - 50,5 % |
| Brookfield-Viskosität: | max. 300 mPas (Spindel 2, 50 Upm, 23°C) |
| Glasübergangstemperatur: | 15°C |
| Styrolgehalt in Polymer: | 60,5 % |

### Vergleichsdispersion 2 (V2)

Styrol-Butadien-Latex DL 521M (DOW Chemical Company)

| | |
|---|---|
| Festgehalt: | 51,5 - 52,5 % |
| Brookfield-Viskosität: | 100 - 300 mPas (Spindel 2, 50 Upm, 23°C) |
| Glasübergangstemperatur: | 6,0°C |
| Styrolgehalt in Polymer: | 63 % |

### Vergleichsdispersion 3 (V3)

Styrol-Butadien-Latex XZ 92227.01 (DOW Chemical Company)

| | |
|---|---|
| Festgehalt: | 50,5 - 51,5 % |
| Brookfield-Viskosität: | 50 - 350 mPas (Spindel 2, 50 Upm, 23°C) |
| Glasübergangstemperatur: | -15,0°C |

### Herstellung der Teppichbeschichtungs-Zusammensetzungen:

Mit den Dispersionen A bis E und den Vergleichsdispersionen V 1 bis V 3 und Mischungen daraus wurden Teppichbeschichtungs-Zusammensetzungen basierend auf folgender Rezeptur hergestellt:

| | |
|---|---|
| 100 Gew.-Teile | der jeweiligen Dispersion oder Mischung (Polymerisat trocken), |
| 450 Gew.-Teile | Kreide (Carbocia 80, Carbocia) (Füllstoff), |
| 0,5 Gew.-Teile | Schaumhilfsmittel (Natriumlaurylsulfat). |

Die Angaben in Gew.-Teile beziehen sich auf das Trockengewicht der jeweiligen Teppichbeschichtungs-Zusammensetzung.

Zusätzliches Wasser wurde in einer Menge zugesetzt, so dass Teppichbeschichtungs-Zusammensetzungen mit einem Festgehalt von 81,5 Gew.-% resultierten. Im Falle der Mischungen aus Styrol-Butadien-Copolymeren und Vinylacetat-Homopolymeren wurde solange Wasser zugegeben, bis die Zielviskosität von 6000 bis 7000 mPas erreicht wurde (Messung mit Brookfield RV Messgerät mit Spindel 4, 20 Upm, bei 25°C).

Zur Herstellung der Teppichbeschichtungs-Zusammensetzungen wurden das Wasser und die jeweilige Dispersion bzw. Dispersionsmischung vorgelegt und unter Rühren der Füllstoff und danach das Schaumhilfsmittel zugegeben.

Die Teppichbeschichtungszusammensetzungen hatten einen Festgehalt von 81,5 Gew.-% und einen Füllgrad von 450 Gew.-%.

Anschließend wurde durch Zugabe eines Verdickungsmittels (Acrylatverdicker Matco TR 10, Matco) eine Endviskosität von 6500 mPas eingestellt (Messung mit Brookfield RV Messgerät mit Spindel 4, 20 Upm, bei 25°C).

Im Allgemeinen sind Endviskositäten von 6000 bis 7000 mPas akzeptabel.

### Herstellung der Teppiche:

Die jeweilige, oben beschriebene Teppichbeschichtungs-Zusammensetzung wurde 3 Minuten mit einer Küchenmaschine aufgeschäumt, so dass Schaumlitergewichte von 950 bis 1015 g/L erreicht wurden.

Als Vorstrich wurden 148 g der jeweiligen, aufgeschäumten Teppichbeschichtungs-Zusammensetzung gleichmäßig auf einen 38 cm X 33 cm großen Tuftrohteppich verteilt (Schlingenpol Tuftteppich, 100 % Polyamid; 550 g/m² Polgewicht; Qualität Helsinki; Hersteller: Firma Edel).

Anschließend wurden als Zweitstrich 60 g der jeweiligen, aufgeschäumten Teppichbeschichtungs-Zusammensetzung aufgebracht und gleichmäßig verteilt. Dann wurde ein textiler Rücken (Polypropylengewebe, Action Back) aufgelegt und zweimal mit einer 1,6 kg schweren Rolle ohne Druck eingearbeitet. Es wurde für 20 Minuten bei 130°C in einem Ofen getrocknet.

### Messung der Noppenauszugskraft:

Die Testung der Noppenauszugskraft erfolgte gemäß ISO 4919 mit Hilfe einer Zwick-Prüfmaschine bei 23°C und 50 % relativer Luftfeuchtigkeit. Der jeweilige Teppich wurde in den Aufsatz am Boden des Messgerätes eingespannt und eine Nadel in eine Teppichschlaufe eingefädelt. An zehn verschiedenen Teppichschlaufen wurde die Kraft bestimmt, welche erforderlich war, um eine Schlaufe aus dem Teppich herauszuziehen. Der Mittelwert der Messergebnisse ergab die Trocken-Noppenauszugskraft.

Zur Bestimmung der Nass-Noppenauszugskraft wurden Proben, wie sie für die Bestimmung der Trocken-Noppenauszugskraft hergestellt wurden, für 10 min in Wasser eingelegt, vor der weiteren Austestung oberflächlich trockengetupft und auf diese Weise von überstehendem Wasser befreit

Die Trocken-Noppenauszugskraft und die Nass-Noppenauszugskraft sind ein Maß für die Güte der Noppenbindung durch den Vorstrich und für die Abnutzungseigenschaften der Teppichoberfläche. Daher sollten diese möglichst hoch ausfallen.

### Messung der Trennfestigkeit:

Die Trennfestigkeit wurde analog zu DIN EN ISO 11857 mit Hilfe einer Zwick-Prüfmaschine bei 23°C und 50 % relativer Luftfeuchtigkeit bestimmt. Es wurden drei Proben hergestellt, indem aus dem jeweiligen Teppich in Maschinenlaufrichtung Streifen mit einer Breite von 5 cm und einer Länge von 20 cm zugeschnitten und an der Schmalseite von Hand auf einer Länge von 5 cm getrennt wurden. Jede angetrennte Probe wurde in eine Zwick-Prüfmaschine eingespannt und mit einer Geschwindigkeit von 300 mm/min der Zweitrücken vom Teppich abgetrennt. Der Gesamtmittelwert aus fünf Proben wurde gemäß DIN EN ISO 11857 aus den Mittelwerten der Spitzenwerte je Probe in dem zulässigen Messbereich bestimmt. Dabei wurden die ersten 25 % der jeweiligen Messkurve markiert und für die Auswertung nicht berücksichtigt. Die nächsten 50 % des Diagrammschriebs wurden in 5 gleiche Abschnitte geteilt und aus diesen der jeweilige Spitzenwert ermittelt. Die Spitzenwerte wurden zum Mittelwert zusammengefasst und die Mittelwerte wiederum zu Gesamtmittelwert. Die Trennfestigkeit wurde in Newton [N] angegeben.

Zur Bestimmung der Nass-Trennfestigkeit wurden Proben, wie sie für die Bestimmung der Trocken-Trennfestigkeit hergestellt wurden, zusätzlich für 10 min in Wasser eingelegt und vor der weiteren Austestung oberflächlich trockengetupft und auf diese Weise von überstehendem Wasser befreit.

### Messung des Biegewiderstandes gefüllter Polymerfilme:

Zur Untersuchung der Biegewiderstandseigenschaften gefüllter Polymerfilme als Maß für die Flexibilität des fertigen Teppichs wurden die vorher beschriebenen Formulierungen für Teppichbeschichtungs-Zusammensetzungen verwendet.

Die Teppichbeschichtungs-Zusammensetzungen wurden mit einer Rakel so auf eine Glasscheibe aufgezogen, dass sich eine Schichtdicke von 2 mm ergab. Die Vortrocknung der gefüllten Polymerfilme erfolgte bei 23°C und 50 % relativer Luftfeuchtigkeit für die Dauer von 24 Stunden. Vor der Weiterbehandlung wurden pro Teppichbeschichtungs-Zusammensetzung jeweils 5 Prüfkörper in den Abmessungen 38 mm X 50 mm ausgestanzt.

Die so präparierten und vorgetrockneten Prüfkörper wurden anschließend wie die mit der entsprechenden Teppichbeschichtungs-Zusammensetzung ausgerüsteten Teppiche für 20 Minuten bei 130°C im Trockenschrank thermisch nachbehandelt und anschließend nach Abkühlen für 1 Stunde unter Normklima (23°C und 50% relative Luftfeuchtigkeit) gelagert. Nach der abschließenden Lagerung erfolgte die Messung des Biegewiderstandes in mN nach SCAN P 29:95 (NORM).

Dabei wurden die Prüfkörper nacheinander in das Gerät (L&W Bending Resistance Tester SE 016) eingespannt und bei einem Biegewinkel von 15° bei einer Messlänge von 25 mm gemessen. Bestimmt wurde der maximale Biegewiderstand als Kraft in mN die bei der Auslenkung der Probe unter konstanter Winkelgeschwindigkeit bei vorgewählter Messlänge auftritt. Die so erhaltenen Ergebnisse wurden durch Division durch die Filmdicke in einen spezifischen Biegewiderstand in mN/mm umgerechnet, um Unterschiede in den Schichtdicken der gemessenen Filme zu korrigieren. Die Filmdicke wurde per µm-Messgerät an 5 Punkten bestimmt und der Mittelwert gebildet.

### Beispiel 1:

In der Tabelle 1 sind die Ergebnisse aus Messungen der mechanischen Eigenschaften von fertigen Teppichen, hergestellt aus Bindemittelmischungen der Dispersionen A (Tg 7°C, mischstabilisiert) und B (Tg 33°C), beschrieben.

Die Trennfestigkeiten und Noppenauszugskräfte aus den mechanischen Prüfungen lassen sich in einem Summenparameter verdichten, welcher die kombinierten Eigenschaften der mechanischen Prüfung zusammenfasst und möglicherweise auftretende Operatoreffekte minimiert. Der Summenparameter gibt ebenfalls Auskunft über die Performance der Dispersionsmischungen im Vergleich zu den nicht-abgemischten Dispersionen. Ist der Summenwert der Mischung höher als die Werte der Originaldispersionen kann von einer verstärkenden Wirkung ausgegangen werden.

Die Beispiele 1.A bis 1.E zeigen die Einstellbarkeit des spezifischen Biegewiderstandes des gefüllten Filmes als Indikator für den fertigen Teppich über die Wahl des Mischungsverhältnisses von Vinylacetat-Ethylen-Copoylmerdispersion und Vinylacetat-Homopolymerdispersion. Der Biegewiderstand ist mit den Mischungen generell besser als mit Rezepturen, welche nur eine Dispersion enthalten. Dies gilt auch für die Noppenauszugskraft, welche mit den Mischungen generell besser ist. Weiterhin zeigt ein Abmischverhältnis von 40 Gew.-% VAE-Dispersion und 60 Gew.-% VAc-Dispersion (Beispiel 1.D) einen höheren Summenparameter als die einzeln eingesetzten Dispersionen.

**Tabelle 1 Testergebnisse Mischungen aus Dispersionen A und B.**

| Beispiel 1 | | | Trennfestigkeit | Noppenauszugskraft | Summenparameter | Biegewiderstand* |
|---|---|---|---|---|---|---|
| | Disp. A | Disp. B | | | | |
| | | | trocken | trocken | | |
| | Gew.-% | Gew.-% | [N] | [N] | [N] | [mN/mm] |
| 1.A | 100 | 0 | 44,4 | 31,4 | 75,8 | 678 |
| 1.B | 90 | 10 | 38,3 | 37,4 | 75,7 | 1260 |
| 1.C | 70 | 30 | 39,7 | 42,3 | 82,0 | 2728 |
| 1.D | 40 | 60 | 56,9 | 34,2 | 91,1 | 4304 |
| 1.E | 0 | 100 | 59,6 | 28,6 | 88,2 | *X* |

| | | | | | | |
|---|---|---|---|---|---|---|
| *Biegewiderstände, die mit X angegeben sind, konnten aufgrund zu hoher Steifigkeit nicht gemessen werden. Die korrespondierenden Teppiche zeigten keinerlei Flexibilität und bei Biegung Brechen der Rückenbeschichtung. | | | | | | |

### Beispiel 2:

Kombinationen einer polyvinylalkoholstabilisierten Vinylacetat-Ethylen-Copolymerdispersion (Disp. C) mit einer niedrigen Tg von -6°C und einer polyvinylalkoholstabilisierten Vinylacetat-Hompolymerdispersion (Disp. D) zeigten ähnliches Verhalten bezüglich Flexibilität der ausgerüsteten Teppiche und mechanischen Prüfdaten. Besonders hervorzuheben sind neben der überraschend einfachen Justierbarkeit der Teppichflexibilität über einen weiten Bereich von Mischungsverhältnissen der Dispersionen auch die unvermutet hohen Festigkeiten nach Wasserbehandlung.

Auch hier lassen sich die Ergebnisse der Trennfestigkeits- und Noppenauszugsuntersuchung zu einem Summenparameter verdichten, der eine bessere Bewertung der Gesamtperformanz gestattet. Die Ergebnisse für die Mischungen sind dabei in den Beispielen 2.B bis 2.F, insbesondere nach Wasserbehandlung, besser als die Ergebnisse der einzelnen Dispersionen.

**Tabelle 2 Testergebnisse Mischungen aus Dispersionen C und D.**

| Beispiel 2 | | | Trennfestigkeit | | Noppenauszugskraft | | Biege-Widerstand* | Summenparameter | |
|---|---|---|---|---|---|---|---|---|---|
| | Disp. C | Disp. D | trocken | nass | trocken | nass | | trocken | nass |
| | Gew.-% | Gew.-% | [N] | [N] | [N] | [N] | [mN/mm] | [N] | [N] |
| 2.A | 100 | 0 | 58,5 | 20,1 | 28,5 | 13,4 | 989 | 87 | 33,6 |
| 2.B | 90 | 10 | 65 | 21,2 | 23,1 | 12,6 | 1818 | 88,1 | 33,8 |
| 2.C | 80 | 20 | 61 | 21,2 | 24,5 | 16,0 | 2335 | 85,5 | 37,2 |
| 2.D | 70 | 30 | 59,3 | 18,2 | 29,7 | 15,8 | 3074 | 89,0 | 34,0 |
| 2.E | 60 | 40 | 58 | 21,2 | 23,9 | 18,6 | 3202 | 81,9 | 39,8 |
| 2.F | 50 | 50 | 51,7 | 18,6 | 22,8 | 21,1 | 3282 | 74,5 | 39,9 |
| 2.G | 0 | 100 | 67,4 | 12,8 | 23,55 | 16,4 | *X* | 90,9 | 29,2 |

| | | | | | | | | | |
|---|---|---|---|---|---|---|---|---|---|
| *Biegewiderstände, die mit X angegeben sind, konnten aufgrund zu hoher Steifigkeit nicht gemessen werden. Die korrespondierenden Teppiche zeigten keinerlei Flexibilität und bei Biegung Brechen der Rückenbeschichtung. | | | | | | | | | |

### Beispiel 3:

In Beispiel 3 wurden wie in Beispiel 2 Mischungen von rein Polyvinylalkohol-stabilisierten Dispersionen untersucht, mit dem Unterschied, dass die Vinylacetat-Ethylen-Copolymerdispersion einen niedrigeren Ethylengehalt aufwies und eine Glasübergangstemperatur von 15°C (Dispersion E). Das Vinylacetat-Homopolymer war das in Beispiel 2 eingesetzte niedrigviskose Polymerisat (Dispersion D).

Auch hier zeigten die Abmischungen in den Summenparametern der mechanischen Festigkeit bessere Eigenschaften als ihre korrespondierenden Einzeldispersionen. Aufgrund der härteren Polymerbasis mit bereits höherer Tg (15°C) des Vinylacetat-Ethylen-Copolymeren wurde die Grenze des messbaren Biegewiderstandes bereits bei der Abmischung in Beispiel 3.C erreicht.

**Tabelle 3 Testergebnisse Mischungen Dispersionen E und D**

| Beispiel 3 | | | Trennfestigkeit | Noppenauszugskraft | Biege-Widerstand* | Summenparameter |
|---|---|---|---|---|---|---|
| | Disp. E | Disp. D | trocken | trocken | | trocken |
| Bsp. | Gew.-% | Gew.-% | [N] | [N] | [mN/mm] | [N] |
| 3.A | 100 | 0 | 69,1 | 28,8 | 1853 | 98,0 |
| 3.B | 90 | 10 | 63,6 | 37,6 | 2950 | 101,3 |
| 3.C | 70 | 30 | 65,0 | 33,8 | 4472 | 98,8 |
| 3.D | 40 | 60 | 65,3 | 24,4 | X | 89,8 |
| 3.E | 0 | 100 | 67,4 | 23,5 | X | 91,0 |

| | | | | | | |
|---|---|---|---|---|---|---|
| *Biegewiderstände, die mit X angegeben sind, konnten aufgrund zu hoher Steifigkeit nicht gemessen werden. Die korrespondierenden Teppiche zeigten keinerlei Flexibilität und bei Biegung Brechen der Rückenbeschichtung. | | | | | | |

### Beispiel 4

Abmischungen der harten Vinylacetat-Ethylen-Dispersion aus Beispiel 3 (Tg = 15°C, Dispersion E) mit einer höherviskosen Hompolymerdispersion auf Basis Vinylacetat (Dispersion B) zeigten in den Ergebnissen der mechanischen Prüfung für das Beispiel 4.B bereits mit nur 10 % Homopolymerdispersion deutlich bessere Werte als die Einzeldispersionen.

**Tabelle 4 Testergebnisse Mischungen Dispersionen E und B,**

| Beispiel 4 | | | Trennfestigkeit | Noppenauszugskraft | Biegewiderstand | Summenparameter |
|---|---|---|---|---|---|---|
| | Disp. E | Disp. B | trocken | trocken | | trocken |
| Bsp. | Gew.-% | Gew.-% | [N] | [N] | [mN/mm] | [N] |
| 4.A | 100 | 0 | 69,1 | 28,8 | 1853 | 98,0 |
| 4.B | 90 | 10 | 67 | 38,8 | 3743 | 105,8 |
| 4.C | 40 | 60 | 69,4 | 30,3 | *X* | 99,8 |
| 4.D | 0 | 100 | 59,6 | 28,1 | *X* | 88,3 |

| | | | | | | |
|---|---|---|---|---|---|---|
| *Biegewiederstände, die mit X angegeben sind, konnten aufgrund zu hoher Steifigkeit nicht gemessen werden. Die korrespondierenden Teppiche zeigten keinerlei Flexibilität und bei Biegung Brechen der Rückenbeschichtung. | | | | | | |

### Beispiele 5 bis 7:

In den Vergleichsexperimenten der Beispiele 5 bis 7 wurden in jeweils zwei Einsatzverhältnissen (jeweils bezogen auf den Festanteil der Dispersion, also Polymer auf Polymer in Gew.-% / Gew.-%), 60 Gew.-% zu 40 Gew.-% und umgekehrt, Mischungen mit Homopolymeren und kommerziell verfügbaren Styrol-Butadien-Copolymerisaten hergestellt.

Die resultierenden Festgehälter sind in Tabelle 5 (Spalte 3) zusammengefasst. Die Abweichungen vom Zielfestgehalt 81,5 %, dem Festgehalt der Formulierungen aus Vinylacetat-Ethylen- und Vinylacetat Homopolymer Mischungen, sind teilweise erheblich.

Dieses bedeutet eine unmittelbare Erhöhung der Formulierungs- und Prozesskosten aufgrund der höheren zu verdampfenden Wassermenge. Derart niedrige Festgehälter der Formulierung sind daher kommerziell nicht attraktiv.

Deutlich wird die Unverträglichkeit poylvinylalkoholstabilisierter Vinylacetat-Homopolymerdispersionen und Styrol-Butadien-Copolymeren, wie in der WO 2013/123210 erwähnt, bei der direkten Mischung beider Dispersionen. Ohne Zugabe von Emulgatoren oder starker Verdünnung kann in diesen Mischungen ein erheblicher Anstieg der Viskosität in Abhängigkeit vom Mischungsverhältnis verzeichnet werden.

Die Daten der Mischungsviskositäten sind ebenfalls in Tabelle 5 angegeben. Derart hohe Viskositäten sind im Allgemeinen in typischen Anlagen nicht prozessierbar und können zu langen Standzeiten von Anlagenteilen führen.

Die Mischungen von Vinylacetat-Ethylen-Copolymeren mit Vinylacetat Homopolymeren hingegen führen zu keinen derartigen Viskositätsanstiegen und es sind ebenso problemlos die Zielfestgehälter der Formulierung von 81,5 % zu erreichen.

Die Beispiele 8 bis 10 belegen die Verträglichkeit von Vinylacetat-Ethylen-Dispersionen und Vinylacetat-Homopolymerdispersionen anhand von Viskositätsdaten der Mischung in den gleichen Mischungsverhältnissen aus den Beispielen 5 bis 7. Der Vorteil liegt hier insbesondere in der Verträglichkeit beider Polymere und der Verträglichkeit der Stabilisierungssysteme. Zudem sind wie bereits in den Beispielen 1 bis 4 gezeigt weitere positive Effekte, wie die Einstellung der Flexibilität und die Verbesserung der mechanischen Eigenschaften, mit den erfindungsgemäßen Mischungen verbunden.

**Tabelle 5 Zusammenfassung der Viskositäten von Disperisonsmischungen.**

| Beispiele 5-10 | | | Verhältnis | | Viskosität |
|---|---|---|---|---|---|
| | Mischungen Dispersionen | Festgehalt Formulierung | SB / VAc | VAE / VAc | Mischung Dispersionen |
| Bsp. | Disp./Disp. | Gew.-% | Gew.-% | Gew.-% | [mPa s] |
| 5 | V1/B | 75,8 | 60/40 | | 129000 |
| 6 | V2/B | 77,6 | 60/40 | | 150000 |
| 7 | V3/B | 72,6 | 60/40 | | 70000 |
| 8 | A/B | 81,5 | | 60/40 | 3330 |
| 9 | C/D | 81,5 | | 60/40 | 358 |
| 10 | E/B | 81,5 | | 60/40 | 3780 |

| | | | | | |
|---|---|---|---|---|---|
| Mit SB/VAc Verhältnis sind die Abmischungsverhältnisse der Dispersionen in Spalte 3 und 4 bezogen auf den Festgehalt der jeweiligen Dispersion gemeint. SB: Styrol-Butadien Dispersion, VAc: Vinylacetat Homopolymerdispersion | | | | | |

## Patentansprüche

1. Verwendung von Gemischen enthaltend eine wasserige Dispersion eines Vinylacetat-Polymerisats und eine wasserige Dispersion eines Vinylacetat-Ethylen-Copolymerisats fur Teppichbeschichtungs-Zusammensetzungen.

2. Verwendung nach Anspruch 1, **dadurch gekennzeichnet, dass** das Vinylacetat-Polymerisat mittels radikalisch initiierter Emulsionspolymerisation in wasserigern Medium von 99 bis 100 Gew.-% Vinylacetat und gegebenenfalls bis zu 1 Gew.-% weiterer Comonomere, jeweils bezogen auf das Gesamtgewicht der Monomere, erhalten wird, wobei sich die Angaben in Gew.-% jeweils auf 100 Gew.-%. aufaddieren.

3. Verwendung nach Anspruch 1 oder 2, **dadurch gekennzeichnet, dass** das Vinylacetat-Ethylen-Copolymerisat mittels radikalisch initiierter Emulsionspolymerisation in wässerigem Medium von 65 bis 98 Gew.-% Vinylacetat und 2 bis 30 Gew.-% Ethylen, und gegebenenfalls bis zu 10 Gew.-% weiterer Comonomere, jeweils bezogen auf das Gesamtgewicht der Monomere, erhalten wird, wobei sich die Angaben in Gew.-% jeweils auf 100 Gew.-%. aufaddieren.

4. Verwendung nach Anspruch 1 oder 2, **dadurch gekennzeichnet, dass** das die Polymerisation des Vinylacetat-Polymerisats in Gegenwart von Schutzkolloid, gegebenenfalls in Kombination mit Emulgator, erfolgt.

5. Verwendung nach Anspruch 1 oder 3, **dadurch gekennzeichnet, dass** das die Polymerisation des Vinylacetat-Ethylen-Copolymerisats in Gegenwart von Schutzkolloid oder in Gegenwart von Emulgator oder in Gegenwart einer Kombination von Schutzkolloid und Emulgator erfolgt.

6. Verwendung nach Anspruch 4 oder 5, **dadurch gekennzeichnet, dass** sowohl die Polymerisation des Vinylacetat-Polymerisats als auch die Polymerisation des Vinylacetat-Ethylen-Copolymerisats in Gegenwart von teilverseiftem Polyvinylalkohol mit einem Hydrolysegrad von 80 bis 95 Mol-% und einer Hopplerviskositat in 4 %-iger wassriger Losung von 1 bis 40 mPas (Methode nach Hoppler bei 20°C, DIN 53015) erfolgt.

7. Verwendung nach Anspruch 1 bis 6, **dadurch gekennzeichnet, dass** das die Gemische mindestens eine wässerige Dispersion eines Vinylacetat-Polymerisats und mindestens eine wasserige Dispersion eines Vinylacetat-Ethylen-Copolymerisats mit einem Gewichtsanteil von 10 bis 60 Gew.-% Vinylacetat-Polymerisat, jeweils bezogen auf das Gesamtgewicht von Vinylacetat-Polymerisat und Vinylacotat-Ethylen-Copolymerisat (trocken/trocken) enthalten.

8. Teppichbeschichtungs-Zusammensetzungen hergestellt aus einem Gemisch enthaltend eine wasserige Dispersion eines Vinylacetat-Polymerisats und eine wässerige Dispersion eines Vinylacetat-Ethylen-Copolymerisats, und 100 bis 1400 Gew.-% Füllstoffe, bezogen auf das Gewicht des Gemisches von Vinylacetat-Polymerisat und Vinylacetat-Ethylen-Copolymerisat (trocken/trocken), und Wasser, und gegebenenfalls einem oder mehreren Additiven und gegebenenfalls einem oder mehreren Zusatzstoffen, und wobei das Vinylacetat-Ethylen-Copolymerisat mittels radikalisch initiierter Emulsionspolymerisation in wässerigem Medium von 65 bis 98 Gew.-% Vinylacetat und 2 bis 30 Gew.-% Ethylen, und gegebenenfalls bis zu 10 Gew.-% weiterer Comonomere, jeweils bezogen auf das Gesamtgewicht der Monomere, erhalten wird, **dadurch gekennzeichnet, dass** das Gemisch aus den wasserigen Dispersionen und dem Füllstoffe, vor der Zugabe von Additiven und Zusatzstoffen, bei einem Feststoffgehalt von 75 bis 85 Gew.-% eine Brookfield-Viskositat von < 7000 mPas aufweist (Messung mit Brookfield RV Messgerät mit Spindel 4, 20 Upm, bei 25°C).

9. Teppiche, welche mit einer oder mehreren Teppichbeschichtungs-Zusammensetzungen gemäß Anspruch 8 im Vorstrich und/oder Zweitstrich beschichtet sind.

## Claims

1. Use of mixtures comprising an aqueous dispersion of a vinyl acetate polymer and an aqueous dispersion of a vinyl acetate-ethylene copolymer for carpet coating compositions.

2. Use according to Claim 1, **characterized in that** the vinyl acetate polymer is obtained via free-radically initiated emulsion polymerization of 99 to 100 wt% of vinyl acetate and optionally up to 1 wt% of further comonomers, all based on the total weight of the monomers, while the particulars in weight % add up to 100 wt% in each case, in an aqueous medium.

3. Use according to Claim 1 or 2, **characterized in that** the vinyl acetate-ethylene copolymer is obtained via free-radically initiated emulsion polymerization of 65 to 98 wt% of vinyl acetate and 2 to 30 wt% of ethylene and optionally up to 10 wt% of further comonomers, all based on the total weight of the monomers, while the particulars in weight % add up to 100 wt% in each case, in an aqueous medium.

4. Use according to Claim 1 or 2, **characterized in that** the polymerization of the vinyl acetate polymer is effected in the presence of protective colloid, optionally in combination with emulsifier.

5. Use according to Claim 1 or 3, **characterized in that** the polymerization of the vinyl acetate-ethylene copolymer is effected in the presence of protective colloid or in the presence of emulsifier or in the presence of a combination of emulsifier and protective colloid.

6. Use according to Claim 4 or 5, **characterized in that** not only the polymerization of the vinyl acetate polymer but also the polymerisation of the vinyl acetate-ethylene copolymer is effected in the presence of partially hydrolyzed polyvinyl alcohol having an 80 to 95 mol% degree of hydrolysis and a Hoeppler viscosity in 4% aqueous solution of 1 to 40 mPas (Hoeppler method at 20°C, DIN 53015).

7. Use according to Claim 1 to 6, **characterized in that** the mixtures comprise at least one aqueous dispersion of a vinyl acetate polymer and at least one aqueous dispersion of a vinyl acetate-ethylene copolymer at a weight fraction of 10 to 60 wt% of vinyl acetate polymer, both based on the total weight of vinyl acetate polymer and vinyl acetate-ethylene copolymer (dry/dry).

8. Carpet coating compositions prepared from a mixture comprising an aqueous dispersion of a vinyl acetate polymer and an aqueous dispersion of a vinyl acetate-ethylene copolymer, and 100 to 1400 wt% of fillers, based on the weight of the mixture of vinyl acetate polymer and vinyl acetate-ethylene copolymer (dry/dry), and water, and optionally one or more additives and optionally one or more added substances, and wherein the vinyl acetate-ethylene copolymer is obtained via free-radically initiated emulsion polymerization of 65 to 98 wt% of vinyl acetate and 2 to 30 wt% of ethylene and optionally up to 10 wt% of further comonomers, all based on the total weight of the monomers, in an aqueous medium, **characterized in that** the mixture of the aqueous dispersions and the fillers has a Brookfield viscosity of < 7000 mPas at a solids content of 75 to 85 wt% before the admixture of additives and added substances (as measured with Brookfield RV measuring instrument with spindle 4, 20 rpm, at 25°C).

9. Carpets coated with one or more carpet coating compositions according to Claim 8 in the precoat and/or secondary coating.

## Revendications

1. Utilisation de mélanges contenant une dispersion aqueuse d'un polymère d'acétate de vinyle et une dispersion aqueuse d'un copolymère d'acétate de vinyle-éthylène pour des compositions de revêtement de tapis.

2. Utilisation selon la revendication 1, **caractérisée en ce que** le polymère d'acétate de vinyle est obtenu par polymérisation en émulsion initiée par voie radicalaire en milieu aqueux de 99 à 100 % en poids d'acétate de vinyle et éventuellement jusqu'à 1 % en poids de comonomères supplémentaires, à chaque fois par rapport au poids total des monomères, la somme des données en % en poids étant à chaque fois de 100 % en poids.

3. Utilisation selon la revendication 1 ou 2, **caractérisée en ce que** le copolymère d'acétate de vinyle-éthylène est obtenu par polymérisation en émulsion initiée par voie radicalaire en milieu aqueux de 65 à 98 % en poids d'acétate de vinyle et 2 à 30 % en poids d'éthylène, et éventuellement jusqu'à 10 % en poids de comonomères supplémentaires, à chaque fois par rapport au poids total des monomères, la somme des données en % en poids étant à chaque fois de 100 % en poids.

4. Utilisation selon la revendication 1 ou 2, **caractérisée en ce que** la polymérisation du polymère d'acétate de vinyle a lieu en présence d'un colloïde protecteur, éventuellement en combinaison avec un émulsifiant.

5. Utilisation selon la revendication 1 ou 3, **caractérisée en ce que** la polymérisation du copolymère d'acétate de vinyle-éthylène a lieu en présence d'un colloïde protecteur ou en présence d'un émulsifiant ou en présence d'une combinaison d'un colloïde protecteur et d'un émulsifiant.

6. Utilisation selon la revendication 4 ou 5, **caractérisée en ce qu'**aussi bien la polymérisation du polymère d'acétate de vinyle que la polymérisation du copolymère d'acétate de vinyle-éthylène ont lieu en présence d'alcool polyvinylique partiellement saponifié ayant un degré d'hydrolyse de 80 à 95 % en moles et une viscosité de Hoppler dans une solution aqueuse à 4 % de 1 à 40 mPas (méthode selon Hoppler à 20 °C, DIN 53015).

7. Utilisation selon les revendications 1 à 6, **caractérisée en ce que** les mélanges contiennent au moins une dispersion aqueuse d'un polymère d'acétate de vinyle et au moins une dispersion aqueuse d'un copolymère d'acétate de vinyle-éthylène en une proportion en poids de 10 à 60 % en poids de polymère d'acétate de vinyle, à chaque fois par rapport au poids total du polymère d'acétate de vinyle et du copolymère d'acétate de vinyle-éthylène (sec/sec).

8. Compositions de revêtement de tapis fabriquées à partir d'un mélange contenant une dispersion aqueuse d'un polymère d'acétate de vinyle et une dispersion aqueuse d'un copolymère d'acétate de vinyle-éthylène, et 100 à 1 400 % en poids de charges, par rapport au poids du mélange du polymère d'acétate de vinyle et du copolymère d'acétate de vinyle-éthylène (sec/sec), et de l'eau, et éventuellement un ou plusieurs additifs et éventuellement un ou plusieurs ajouts, le copolymère d'acétate de vinyle-éthylène étant obtenu par polymérisation en émulsion initiée par voie radicalaire en milieu aqueux de 65 à 98 % en poids d'acétate de vinyle et 2 à 30 % en poids d'éthylène, et éventuellement jusqu'à 10 % en poids de comonomères supplémentaires, à chaque fois par rapport au poids total des monomères, **caractérisées en ce que** le mélange des dispersions aqueuses et des charges présente, avant l'ajout des additifs et des ajouts, à une teneur en solides de 75 à 85 % en poids, une viscosité de Brookfield < 7 000 mPas (mesure avec un appareil de mesure Brookfield RV avec la tige 4, 20 tours/minute, à 25 °C).

9. Tapis, qui sont revêtus avec une ou plusieurs compositions de revêtement de tapis selon la revendication 8 dans la couche d'apprêt et/ou dans la deuxième couche.
